(19) Europäisches Patentamt
European Patent Office
Office européen des brevets

(11) **EP 4 274 966 B1**

(12) **EUROPÄISCHE PATENTSCHRIFT**

(45) Veröffentlichungstag und Bekanntmachung des Hinweises auf die Patenterteilung:
**27.11.2024  Patentblatt 2024/48**

(21) Anmeldenummer: **22732188.2**

(22) Anmeldetag: **08.06.2022**

(51) Internationale Patentklassifikation (IPC):
**F15B 1/04** (2006.01)

(52) Gemeinsame Patentklassifikation (CPC):
**F15B 1/04;** F15B 2201/205; F15B 2201/31;
F15B 2201/4056; F16B 31/04

(86) Internationale Anmeldenummer:
**PCT/EP2022/065518**

(87) Internationale Veröffentlichungsnummer:
**WO 2022/268504 (29.12.2022 Gazette 2022/52)**

(54) **HYDROSPEICHER**

HYDRAULIC ACCUMULATOR

ACCUMULATEUR HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2021  DE 102021003255**

(43) Veröffentlichungstag der Anmeldung:
**15.11.2023  Patentblatt 2023/46**

(73) Patentinhaber: **Hydac Technology GmbH**
**66280 Sulzbach (DE)**

(72) Erfinder:
• **KLOFT, Peter**
**56235 Ransbach-Baumbach (DE)**
• **KUSSEROW, Torsten**
**54340 Thörnich (DE)**

(74) Vertreter: **Bartels und Partner, Patentanwälte**
**Lange Strasse 51**
**70174 Stuttgart (DE)**

(56) Entgegenhaltungen:
**EP-A1- 1 564 413     DE-A1- 3 712 671**
**DE-C2- 3 840 731     JP-A- H01 224 509**
**US-A- 3 433 117**

• **ANONYMOUS: "DIN 405-1:1997-11 - Rundgewinde allgemeiner Anwendung - Teil 1: Gewindeprofile, Nennmaße", vol. DIN 405, 1 November 1997 (1997-11-01), pages 1 - 6, XP009528275, Retrieved from the Internet <URL:https://www.beuth.de/de/norm/din-405-1/3 044607> [retrieved on 19971101], DOI: 10.31030/7330921**

**Beschreibung**

Die Erfindung betrifft einen Hydrospeicher mit einem Speichergehäuse, das zumindest auf einer freien Stirnseite mit einem Deckelteil verschlossen ist, das entlang einer Gewindestrecke in dem Speichergehäuse festlegbar ist.

Durch DE 10 2018 005 204 A1 ist ein gattungsgemäßer Hydrospeicher bekannt, insbesondere in Form eines Kolbenspeichers, mit einem Speichergehäuse und einem darin angeordneten Trennelement, insbesondere in Form eines Kolbens, das eine Fluid- von einer Gasseite trennt, wobei zumindest die Gasseite mittels eines Schauglases in einem Deckelteil des Hydrospeichers inspizierbar ist, das im Speichergehäuse entlang einer Gewindestrecke festlegbar, insbesondere ein- und ausschraubbar, ausgeführt ist.

Die Gewindestrecke ist bei der bekannten Lösung aus einem Innengewinde im Speichergehäuse und aus einem dazu passenden Außengewinde im Deckelteil ausgeführt. Solche hydropneumatischen Kolbenspeicher werden bis hin zu sehr großen Durchmessern derart über die Gewindestrecke mit sogenannten Kompaktdeckeln als Deckelteile an den freien offenen Enden verschlossen. Dergestalt werden also sehr massive Deckelteile in das Kolbenspeicherrohr, das das Speichergehäuse in Form eines zylindrischen Mantels bildet, eingeschraubt. Die Steifigkeit des zylindrischen Mantels des Speichergehäuses ist dabei um Größenordnungen kleiner als die des Kompakt-Deckelteils. Im Falle des Versagens durch Ermüdung tritt der Bruch in nahezu allen Fällen am ersten Gewindegang hinter einem Gewindefreistich im zylindrischen Mantel des Speichergehäuses auf. Das diesbezügliche Spannungserhöhungen, die zum Bruch führen können in diesem Bereich tatsächlich vorhanden sind, kann in Form sogenannter FEM-Analysen nachgewiesen werden.

Die Größe der Spannungsüberhöhung hängt sehr stark von der Gewindemodulierung und der damit einhergehenden Kerbwirkung ab. Weiterhin haben Versuche ergeben, dass es zu großen Streuungen in den Versuchsergebnissen kommen kann. Selbst wenn die rohrförmigen Speichergehäuse und die kompakt ausgebildeten Deckelteile aus jeweils gleichen Materialchargen bestehen, treten diese "chaotischen" Streuungen auf. Ursache sind kleinste Unterschiede in den Gewinden, die durch unterschiedliche Geometrien der Herstell-Werkzeuge bedingt sind, selbst wenn diese innerhalb der zulässigen Werkzeugtoleranzen liegen. So kommt es zu einem Verschleiß oder kleinen Ausbrüchen an den Werkzeugen, die indirekt zu den Ermüdungsbrüchen in den Gewindegängen der bearbeiteten Gewindestrecke führen.

Mit den bisher zum Einsatz kommenden metrischen Norm-Gewinden respektive ISO-Gewinden mit einem zumindest trapezförmigen Verlauf für das jeweilige Innengewinde, das im Speichergehäuse eingebracht ist, ist ein entsprechend empfindliches Gewinde gegenüber Kerbwirkung geschaffen und insbesondere beim Auftreten hoher Drücke oder raschen Druckwechsein im Speichergehäuse kommt es dann im Betrieb zu Ermüdungsbrüchen und damit zu einem Versagen des Hydrospeichers als Ganzes.

Zwar wurde bei hydropneumatischen Druckspeicherlösungen respektive Hydrospeichern auch schon vorgeschlagen, unter Vermeiden von Festlegegewinden, die zylindrischen Enden des Speichergehäuses auf das korrespondierende Deckelteil durch ein Bördelverfahren umzulegen und eine dabei entstehende Kehlnaht zwischen dem umgelegten Rand des Speichergehäuses und der Oberseite des Deckelteils mit einer Schweißnaht dauerhaft zu verfüllen zum Festlegen des Deckelteils am Speichergehäuse; allein bei der dahingehenden Lösung (DE 10 2014 010 006 A1) ist die dahingehende Verbindung nur noch zerstörend lösbar, sodass dahingehende Hydrospeicher im Versagensfall gegen Neu-Speicher zu tauschen sind, und ein Öffnen des Speichergehäuses, insbesondere zu Wartungszwecken oder für einen Austausch des Trennkolbens, ist dem Grunde nach nicht möglich. Insoweit ist Hydrospeicherlösungen der Vorzug zu geben, die über ein- und ausschraubbare Deckelteile in ein Speichergehäuse verfügen.

Weitere Hydrospeicher gehen aus der JP H01-224509 A, der EP 1 564 413 A1 und der DE 37 12 671 A1 hervor.

Die DIN 405-1: 1997-11, die DE 38 40 731 C2 und die US 3 433 117 A betreffen Gewinde.

Ausgehend von diesem Stand der Technik liegt der Erfindung die Aufgabe zugrunde, den eingangs erwähnten Hydrospeicher dahingehend weiter zu verbessern, dass Ermüdungsbrüche auch bei entsprechend hoher Druckbeanspruchung des Hydrospeichers vermieden sind.

Eine dahingehende Aufgabe löst ein Hydrospeicher mit den Merkmalen des Patentanspruches 1 in seiner Gesamtheit.

Dadurch, dass gemäß dem kennzeichnenden Teil des Patentanspruches 1 als Teil der Gewindestrecke auf Seiten des Speichergehäuses ein Innengewinde in Form eines Rundgewindes vorhanden ist, dessen einzelne Gewindeflanken in einer fiktiven Verlängerung einen Flankenwinkel von 60° miteinander einschließen und dass der Radius der Rundung im kopfseitigen Bereich des Rundgewindes größer ist als der Radius im fußseitigen Bereich des Rundgewindes, sind große definierte Radien in der Gewindespitze als dem kopfseitigen Gewindebereich und dem Gewindegrund als dem fußseitigen Gewindebereich realisiert, sodass die angesprochene Kerbwirkung für das Innengewinde des Speichergehäuses deutlich reduziert ist und die ungewollten Ermüdungsbrüche vermieden sind.

In besonders vorteilhafter Weise ist dabei vorgesehen, dass als weiterer Teil der genannten Gewindestrecke auf Seiten des Deckelteils ein Außengewinde in Form eines Rundgewindes vorhanden ist, dessen einzelne Gewindeflanken in einer fiktiven Verlängerung einen Flankenwinkel von 60° miteinander einschließen und dass der Radius der Rundung im fußseitigen Bereich kleiner ist als der Radius im kopfseitigen Bereich des Außengewindes. Dergestalt sind innerhalb der Gewindestrecken die Gewindeflanken von Innen- und Außengewinde in Anlage miteinander, wobei die einander benachbarten Gewinderundungen einen radialen Abstand zueinander einnehmen. Dergestalt ist auch für das Außengewinde des Deckelteils die Ermüdungs- und Bruchfestigkeit erhöht und das angesprochene Zusammenwirken der Rundgewinde von Innengewinde des Speichergehäuses zu Außengewinde des Deckelteils führen zu Hydrospeicherlösungen, wie Kolbenspeicherlösungen, mit sehr langer Einsatzdauer, auch wenn die jeweilige Hydrospeicherkonstruktion hohen Druckbeanspruchungen sowie Druckwechselbeanspruchungen im Betrieb ausgesetzt ist.

Vorteilhafte Ausgestaltungen des erfindungsgemäßen Hydrospeichers sind Gegenstand der Unteransprüche.

Im Folgenden wird die erfindungsgemäße Lösung anhand eines Ausführungsbeispiels nach der Zeichnung näher erläutert. Dabei zeigen in prinzipieller und nicht maßstäblicher Darstellung die

Fig. 1    einen Längsschnitt durch die wesentlichen Komponenten eines Hydrospeichers, insbesondere in Form eines Kolbenspeichers, jedoch ohne Trennkolbendarstellung;

Fig. 2    ausschnittsweise einen Längsschnitt durch ein erfindungsgemäßes Innengewinde des Speichergehäuses mit Teilen eines Normgewindes nach dem Stand der Technik;

Fig. 3    ausschnittsweise einen Längsschnitt durch ein erfindungsgemäßes Außengewinde des Deckelteils mit Teilen eines Normgewindes nach dem Stand der Technik; und

Fig. 4    die entlang einer Gewindestrecke zusammenwirkenden Innen- und Außengewinde nach den Fig. 2 bzw. 3.

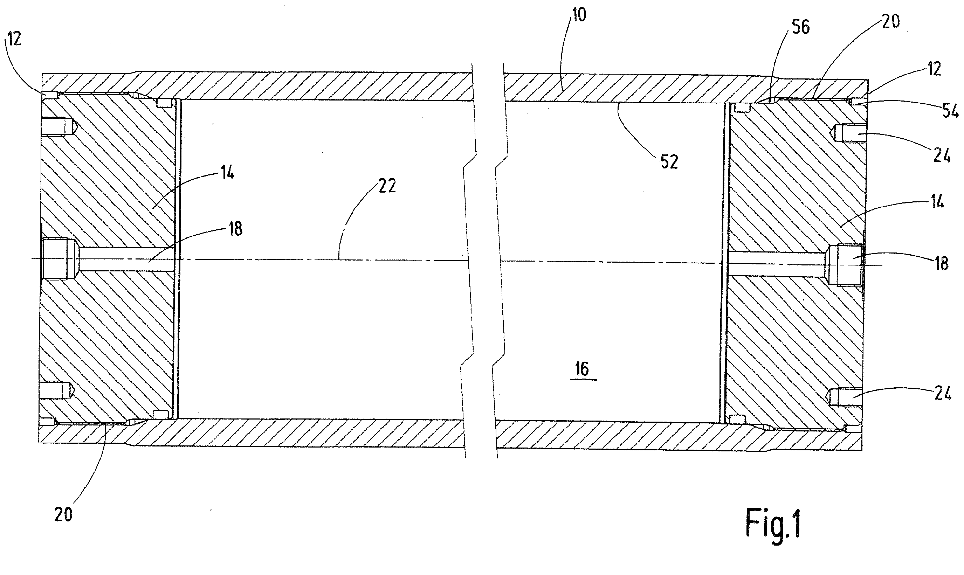

Der in Fig. 1 in Horizontallage dargestellte Hydrospeicher weist ein Speichergehäuse 10 auf, das einen geschlossenen zylindrischen Hohlkörpermantel ausbildet. An seinen freien, einander gegenüberliegenden Stirnseiten 12 ist das Speichergehäuse 10 je mit einem Deckelteil 14 verschlossen, der als massiver Kompaktdeckel ausgebildet ist. Die beiden gleich ausgebildeten Deckelteile 14 verschließen einen Innenraum 16 im Speichergehäuse 10 gegenüber der Umgebung, wobei in dem dahingehenden Innenraum 16 ein nicht näher dargestelltes Trennelement angeordnet ist, beispielsweise in Form eines Trennkolbens, der entlang der Innenwand des Speichergehäuses 10 verfahrbar geführt ist. Solche Hydrospeicheranordnungen sind Stand der Technik und beispielsweise in der DE 10 2018 005 204 A1 aufgezeigt.

Das nicht näher dargestellte Trennelement, insbesondere in Form eines Trennkolbens, trennt innerhalb des Speichergehäuses 10 regelmäßig eine Gasseite von einer Flüssigkeitsseite. Auch die dahingehende Anordnung ist üblich, sodass an dieser Stelle hierauf nicht mehr näher eingegangen wird. Im Hinblick auf diese Ausgestaltung verfügen aber beide Deckelteile 14 über einen Innenkanal 18, mit dem sich der Hydrospeicher zum einen an einen nicht näher dargestellten Fluidkreislauf, wie einen Hydraulikkreislauf, anschließen lässt und zum anderen über diesen Innenkanal 18 mit einem komprimierbaren Arbeitsgas, wie Stickstoffgas, befüllt werden kann. Nach entsprechender Befüllung mit Arbeitsgas wird dann der Innenkanal 18, beispielsweise mittels eines Stopfens oder dergleichen nach außen hin dicht verschlossen.

Das jeweilige Deckelteil 14 ist über eine Gewindestrecke 20 in dem Speichergehäuse 10 festgelegt. Entlang der einen freien Stirnseite des Deckelteils 14 sind an seiner Oberseite diametral zur Längsachse 22 des Speichergehäuses 10 Einschraubbohrungen 24 eingebracht, die dem Angriff eines nicht näher dargestellten Betätigungswerkzeuges dienen zum Ein- und Ausschrauben des jeweiligen Deckelteils 14 in das Speichergehäuse 10 hinein, bzw. aus diesem heraus. Die Wandung des Speichergehäuses 10 ist relativ dünn ausgebildet gegenüber der sehr dicken Wandstärke des jeweils eingesetzten kompakten Deckelteils 14, das als zylindrisches Massivbauteil konzipiert von seinem Außendurchmesser her dem Innendurchmesser des Speichergehäuses 10 entlang der Gewindestrecke 20 angepasst ist.

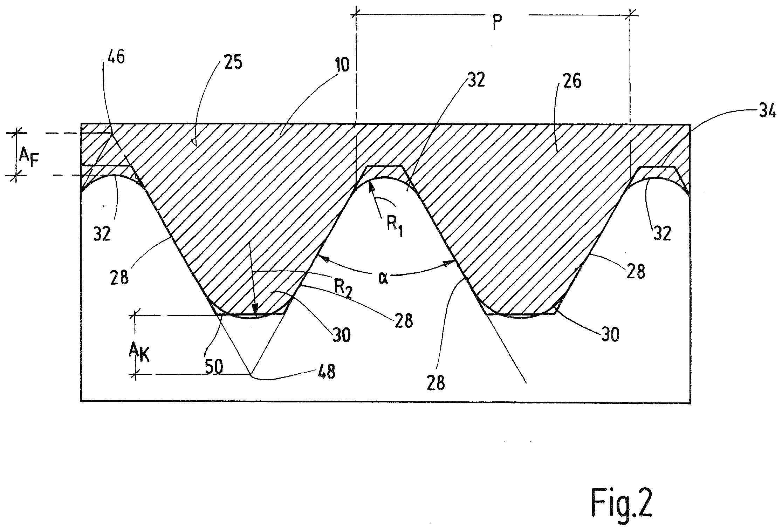

Wie insbesondere die Fig. 2 zeigt, ist als Teil der Gewindestrecke 20 aufseiten des Speichergehäuses 10 als Innengewinde 25 konzipiert ein Rundgewinde 26 vorhanden, dessen einzelne Gewindeflanken 28 in einer fiktiven Verlängerung einen Flankenwinkel $\alpha$ von 60° miteinander einschließen. Wie sich des Weiteren aus der Fig. 2 ergibt, ist der Radius $R_2$ der Rundung im kopfseitigen Bereich 30 größer als der Radius $R_1$ im fußseitigen Bereich 32 des Rundgewindes 26. Zum Vergleich ist neben dem Rundgewinde 26 in die Fig. 2 ein metrisches Normgewinde 34 in Trapezform eingezeichnet, wie es Stand der Technik, ist zum Festlegen von Deckelteilen 14 in zugehörige Speichergehäuse 10. Das Normgewinde weist wie das Rundgewinde eine Steigung P von 2 mm auf. Andere Steigungen P sind im Bedarfsfall realisierbar. Im vorliegenden Fall sei ein metrisches Innengewinde M210 x2 realisiert.

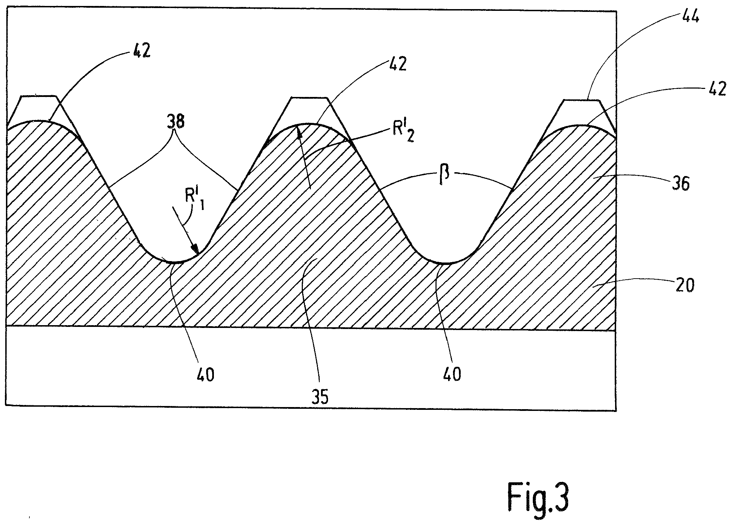

Fig. 3 betrifft nunmehr als Teil der Gewindestrecke 20 aufseiten des Deckelteils 14 ein Außengewinde 35, wiederum in Form eines Rundgewindes 36, dessen einzelne Gewindeflanken 38 in einer fiktiven Verlängerung einen Flankenwinkel $\beta$ von 60° miteinander einschließen. Der Radius $R_1'$ der Rundung im fußseitigen Bereich 40 ist kleiner als der Radius $R_2'$ im kopfseitigen Bereich 42 des Außengewindes 35.

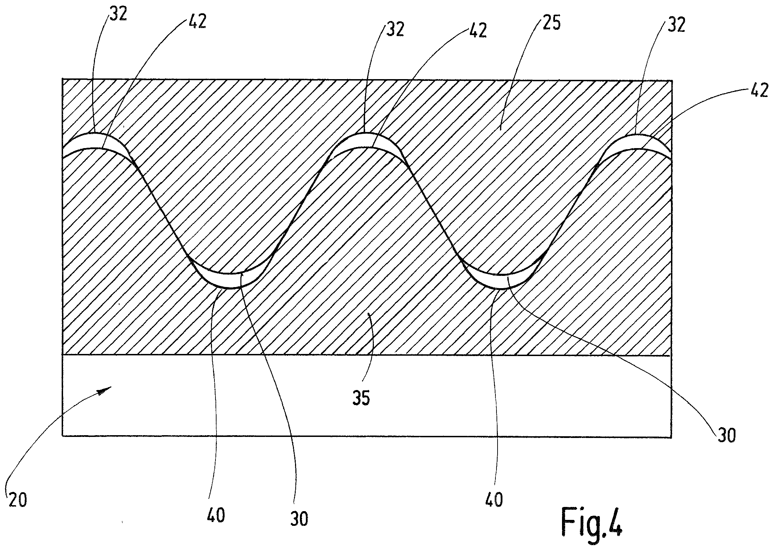

Auch in der Fig. 3 ist wiederum ein bisher verwendetes metrisches Normgewinde 44 eingezeichnet, das als Umhüllende das Rundgewinde 36 des Außengewindes 35 einfasst und dass mit entsprechender Steigung P mit dem Normgewinde 34 nach der Fig. 2 in üblicher Weise zusammenwirkt. Auch hier dient wiederum als Steigung für das Rundgewinde 36 ein Wert von 2 mm gemäß der Darstellung nach der Fig. 2. In der Fig. 4 ist nunmehr das Zusammenwirken von Innengewinde 25 des Speichergehäuses 10 mit Außengewinde 35 des Deckelteils 14 gezeigt, wobei die einander benachbarten Gewindeflanken 28, 38 paarweise einander zugeordnet in Anlage miteinander sind. Ferner sind die fußseitigen und kopfseitigen Rundungen auf radialem Abstand zueinander gehalten, wobei eine Rundung $R_2$, $R'_2$ mit größerem Radius immer auf eine Rundung $R'_1$, $R_1$ mit kleinerem Radius trifft, sodass die jeweilige Rundung mit dem größeren Radius die kleinere Rundung über die Gewindeflanken 28, 38 abstützen kann und demgemäß Kerbwirkungen auch bei hoher Beanspruchung des Hydrospeichers im Gewindegrund mit Sicherheit vermieden sind.

Dabei ergeben sich nach folgenden Formeln für die fußseitige Rundung $R_1$, $R'_1 = \frac{1}{6} H$ und für die kopfseitige Rundung $R_2$, $R'_2 = \frac{1}{5} P$ mit $H = \sqrt{\frac{3}{2} P}$ und mit P als der Steigung des Rundgewindes.

Im vorliegenden Fall beträgt die Steigung 2 mm, woraus sich der Wert H mit 1,73 mm ergibt. Die Rundungen $R_1$, $R'_1$ haben dann einen Radius von 0,289 mm und die kopfseitigen Radien $R_2$, $R'_2$ betragen 0,4 mm. Als Nenndurchmesser im Bereich der Gewindestrecke 20 für den Hydrospeicher werden beispielhaft 210 mm angegeben. Andere Werte sind hier denkbar, die allesamt von der Wahl der Steigung für das Rundgewinde 26 respektive 36 abhängen.

Wie sich weiter aus der Fig. 2 ergibt, münden die fiktiven Verlängerungen zweier benachbarter Gewindeflanken 28 des Innengewindes 25 des Speichergehäuses 10 in einen spitzen Winkel aus, dessen Winkelscheitel 46 zur fußseitigen Rundung 32 an der tiefsten Stelle einen Abstand $A_F = \frac{1}{6} H$ respektive einen Abstand von 0,29 aufweist, was dem Radius $R_1$, $R'_1$ entspricht.

Des Weiteren münden die fiktiven Verlängerungen zweier benachbarter Gewindeflanken 28 in einem weiteren spitzen Winkel aus, dessen weiterer fußseitiger Winkelscheitel 48 zu einer Sekante 50, die entlang der freien Kopfseite des Normgewindes mit derselben Steigung P von 2 mm verläuft, wie die für das Rundgewinde 26 des Innengewindes 25 bestimmte Steigung, und durch die kopfseitige Rundung 30 des Innengewindes 25 geht, mit einem Abstand $A_K = \frac{1}{4} H$, was einem Wert von etwa 0,43 mm entspricht. Wie bereits dargelegt sind beide Gewinde der Gewindestrecke 20 mit einem Nenndurchmesser ausgelegt, der etwa dem 100-fachen der Steigung P des jeweiligen Rundgewindes 26, 36 entspricht und ausgehend von einer Steigung P von 2 mm, hier den Wert 210 mm einnimmt.

Wie sich insbesondere aus der Fig. 1 ergibt, verläuft die Gewindestrecke 20 entlang eines freien Endbereiches des Speichergehäuses 10, in dem die Wandstärke des Speichergehäuses 10 derart reduziert ist, dass die Gewindestrecke 20 innerhalb einer fiktiven Verlängerung des sonstigen zylindrischen Innenwandbereiches 52 des Speichergehäuses 10 zu liegen kommt.

Für eine wirksame Entlastung der Gewindestrecke 20 ist darüber hinaus vorgesehen, dass diese an ihren einander gegenüberliegenden Enden jeweils in eine ringförmige Ausnehmung 54, 56 ausmündet, die von Wandteilen des Speichergehäuses 10 und des Deckelteils 14 begrenzt ist.

Mit der erfindungsgemäßen Lösung ist ein Gewinde realisiert zum Festlegen von Deckelteilen 14 in Speichergehäusen 10 von Hydrospeicherlösungen, das unempfindlich gegenüber Kerben und deren negativen Einfluss auf die Ermüdungsfestigkeit ist. Charakteristisch für das neue Gewinde sind die großen, definierten Radien in der Gewindespitze und dem Gewindegrund bei gegenseitiger Flankenabstützung im Übergangsbereich, sodass die Kerbwirkungen wirksam reduziert sind. Die ansonsten zum Einsatz kommenden Trapez-Normgewinde bilden Gewindepaarungen aus mit extrem steifer "Schraube" gegenüber extrem dünnwandiger "Mutter", was im genannten Anwendungsbereich häufig zu Ermüdungsbrüchen durch Kerbwirkung führt. Untypisch im Vergleich zu solchen Standard-Gewindeformen ist auch, dass bei hydropneumatischen Speichern, der Einsatz sogenannter Feingewinde mit kleineren Steigungen zu einer Erhöhung der Ermüdungsfestigkeit führen und mithin einen lang andauernden Betrieb des Hydrospeichers sicherstellen, auch bei hoher Druckbeanspruchung. Dies hat so keine Entsprechung im Stand der Technik.

**Patentansprüche**

1. Hydrospeicher mit einem Speichergehäuse (10), das zumindest auf einer freien Stirnseite (12) mit einem Deckelteil (14) verschlossen ist, das über eine Gewindestrecke (20) in dem Speichergehäuse (10) festlegbar ist, wobei als Teil der Gewindestrecke (20) auf Seiten des Speichergehäuses (10) ein Innengewinde (25) in Form eines Rundgewindes (26) vorhanden ist, dessen einzelne Gewindeflanken (28) in einer fiktiven Verlängerung einen Flankenwinkel ($\alpha$) von 60° miteinander einschließen und dass der Radius ($R_2$) der Rundung im kopfseitigen Bereich (30) des Rundgewindes (26) größer ist als der Radius ($R_1$) im fußseitigen Bereich (32) des Rundgewindes (26).

2. Hydrospeicher nach Anspruch 1, **dadurch gekennzeichnet, dass** als weiterer Teil der Gewindestrecke (20) auf Seiten des Deckelteils (14) ein Außengewinde (35) in Form eines Rundgewindes (36) vorhanden ist, dessen einzelne Gewindeflanken (38) in einer fiktiven Verlängerung einen Flankenwinkel (($\beta$) von 60° miteinander einschließen und dass der Radius ( $R_1'$ ) der Rundung im fußseitigen Bereich (40) kleiner ist als der Radius $R_2'$ ) im kopfseitigen Bereich (42) des Außengewindes.

3. Hydrospeicher nach Anspruch 1 oder 2, **dadurch gekennzeichnet, dass** sich nach folgenden Formeln die fußseitige Rundung ($R_1$, $R_1'$ ) des Innen- (25) und des Außengewindes (35) mit $R_1$,

$$R_1' = \frac{1}{6}\mathrm{H}$$ und die kopfseitige Rundung ($R_2$, $R_2'$ ) des Innen- (25) und des Außengewindes (35) mit

$R_2$, $$R_2' = \frac{1}{5}\mathrm{P}$$ ergibt mit $$\mathrm{H} = \sqrt{\frac{3}{2}P}$$ und mit P als der Steigung des Rundgewindes (26, 36).

4. Hydrospeicher nach Anspruch 3, **dadurch gekennzeichnet, dass** die fiktiven Verlängerungen zweier benachbarter Gewindeflanken (28) des Innengewindes (25) des Speichergehäuses (10) in einen spitzen Winkel ausmünden, dessen Winkelscheitel (46) zur fußseitigen Rundung (32) an der tiefsten Stelle einen Abstand $$A_F = \frac{1}{6}H$$ aufweist.

5. Hydrospeicher nach einem der vorstehenden Ansprüche 3 oder 4, **dadurch gekennzeichnet, dass** die fiktiven Verlängerungen zweier benachbarter Gewindeflanken (28) in einem weiteren spitzen Winkel ausmünden, dessen Winkelscheitel (48) zu einer Sekante (50), die entlang der freien Kopfseite eines Normgewindes mit derselben Steigung verläuft, wie die für das Rundgewinde (26) des Innengewindes (25) bestimmte Steigung und durch die kopfseitige Rundung (30) des Innengewindes (25) geht, mit einem Abstand $$A_K = \frac{1}{4}H$$ .

6. Hydrospeicher nach einem der vorstehenden Ansprüche wenn von Anspruch 2 abhängig, **dadurch gekennzeichnet, dass** das Innen- und das Außengewinde derart ausgelegt sind, dass der Nenndurchmesser der Gewindestrecke (20) etwa das Hundertfache der Steigung P des jeweiligen Rundgewindes (26, 36) beträgt.

7. Hydrospeicher nach einem der vorstehenden Ansprüche wenn von Anspruch 2 abhängig, **dadurch gekennzeichnet, dass** die fiktive Kontur eines dem Rundgewinde (36) des Deckelteiles (14) entsprechenden metrischen ISO-Normgewindes das Rundgewinde (36) des Außengewindes (35) umhüllt.

8. Hydrospeicher nach einem der vorstehenden Ansprüche wenn von Anspruch 2 abhängig, **dadurch gekennzeichnet, dass** innerhalb der Gewindestrecke (20) die Gewindeflanken (28, 38) von Innen- (25) und Außengewinde (35) in Anlage miteinander sind und die einander benachbarten Gewinderundungen $R_2$, $R_1'$ ; $R_1$, $R_2'$ einen Abstand zueinander einnehmen.

9. Hydrospeicher nach einem der vorstehenden Ansprüche, **dadurch gekennzeichnet, dass** die Gewindestrecke (20) entlang eines freien Endbereiches des Speichergehäuses (10) verläuft, in dem die Wandstärke des Speichergehäuses (10) derart reduziert ist, dass die Gewindestrecke (20) innerhalb einer fiktiven Verlängerung des sonstigen zylindrischen Innenwandbereiches (52) des Speichergehäuses (10) zu liegen kommt.

10. Hydrospeicher nach einem der vorstehenden Ansprüche wenn von Anspruch 2 abhängig, **dadurch gekennzeichnet, dass** die Gewindestrecke (20) bestehend aus Innen-(25) und Außengewinde (35) an ihren einander gegenüberliegenden Enden jeweils in eine ringförmige Ausnehmung (54, 56) ausmündet, die von Wandteilen des Speichergehäuses (10) und des Deckelteils (14) gebildet ist.

**Claims**

1. Hydraulic accumulator having an accumulator housing (10) which is closed at least on a free end face (12) by a cover part (14) which can be fixed in the accumulator housing (10) via a threaded section (20), wherein, as part of the threaded section (20) on the accumulator housing (10), an internal thread (25) in the form of a round thread (26) is present, the individual thread flanks (28) of which together enclose, in a notional extension, a flank angle ($\alpha$) of 60°, and in that the radius ($R_2$) of the rounding is larger in the crest-side region (30) of the round thread (26) than the radius ($R_1$) in the root-side region (32) of the round thread (26).

2. Hydraulic accumulator according to claim 1, **characterised in that** as a further part of the threaded section (20) on the cover part (14), an external thread (35) in the form of a round thread (36) is present, the individual thread flanks (38) of which together enclose, in a notional extension, a flank angle ($\beta$) of 60°, and **in that** the radius ($R_1'$) of the rounding is smaller in the root-side region (40) than the radius ($R_2'$) in the crest-side region (42) of the external thread.

3. Hydraulic accumulator according to claim 1 or 2, **characterised in that**, according to the following formulae, the root-side rounding ($R_1$, $R_1'$) of the internal (25) and the external thread (35) where $R_1$, $$R_1' = \frac{1}{6} \mathsf{H}$$ and the crest-side rounding ($R_2$, $R_2'$) of the internal (25) and external thread (35) where $R_2$, $$R_2' = \frac{1}{5} \mathsf{P}$$, where $$\mathsf{H} = \sqrt{\frac{3}{2}} P$$ and where P is the pitch of the round thread (26, 36).

4. Hydraulic accumulator according to Claim 3, **characterised in that** the notional extensions of two adjacent thread flanks (28) of the internal thread (25) of the accumulator housing (10) terminate in an acute angle, the angular apex (46) of which is at a distance $$A_F = \frac{1}{6} H$$ from the root-side rounding (32) at the lowest point.

5. Hydraulic accumulator according to one of the preceding claims 3 or 4, **characterised in that** the notional extensions of two adjacent thread flanks (28) terminate in a further acute angle, the angular apex (48) of which extends at a distance $$A_K = \frac{1}{4} H$$ from a secant (50), which runs along the free crest side of a standard thread with the same pitch as the pitch determined for the round thread (26) of the internal thread (25) and passes through the crest-side rounding (30) of the internal thread (25).

6. Hydraulic accumulator according to one of the preceding claims, if dependent on claim 2, **characterised in that** the internal thread and the external thread are designed in such a manner that the nominal diameter of the threaded section (20) is approximately one hundred times the pitch P of the respective round thread (26, 36).

7. Hydraulic accumulator according to one of the preceding claims, if dependent on claim 2, **characterised in that** the notional contour of a metric ISO standard thread corresponding to the round thread (36) of the cover part (14) envelops the round thread (36) of the external thread (35).

8. Hydraulic accumulator according to one of the preceding claims, if dependent on claim 2, **characterised in that** within the threaded section (20) the thread flanks (28, 38) of the internal (25) and external threads (35) are in contact with each other and the thread turns $R_2$, $R_1'$; $R_1$, $R_2'$ adjacent to each other are spaced apart from each other.

9. Hydraulic accumulator according to one of the preceding claims, **characterised in that** the threaded section (20) extends along a free end region of the accumulator housing (10) in which the wall thickness of the accumulator housing (10) is reduced in such a manner that the threaded section (20) comes to lie within a notional extension of the other cylindrical inner wall region (52) of the accumulator housing (10).

10. Hydraulic accumulator according to one of the preceding claims, if dependent on claim 2, **characterised in that** the threaded section (20), consisting of an internal (25) and an external thread (35), opens at its opposing ends in each case into an annular recess (54, 56) which is formed by wall parts of the accumulator housing (10) and the cover part (14).

**Revendications**

1. Accumulateur hydraulique ayant une enveloppe (10) d'accumulateur, qui est fermée au moins sur un côté (12) frontal libre par une partie (14) formant couvercle, qui peut être fixée par un segment (20) fileté dans l'enveloppe (10) de l'accumulateur, dans lequel il y a comme partie du segment (20) fileté sur des faces de l'enveloppe (10) de l'accumulateur un taraudage (25) sous la forme d'un filet (26) rond, dont les divers flancs (28) de filet font entre eux, dans un prolongement fictif, un angle ($\alpha$) de flanc de 60° et en ce que le rayon ($R_2$) de l'arrondi dans la partie (30) du côté de la tête du filet (26) rond est plus grand que le rayon ($R_1$) dans la partie (32) du côté du pied du filet (26) rond.

2. Accumulateur hydraulique suivant la revendication 1, **caractérisé en ce qu'**il y a, comme autre partie du segment (20) fileté sur des faces de la partie (14) formant couvercle, un filetage (35) sous la forme d'un filet (36) rond,

dont les divers flancs (38) de filet font entre eux, dans un prolongement fictif, un angle (β) de flanc de 60° et **en ce que** le rayon (R'₁) de l'arrondi dans la partie (40) du côté du pied est plus petit que le rayon (R'₂) dans la partie (42) du côté de la tête du filetage.

3. Accumulateur hydraulique suivant la revendication 1 ou 2, **caractérisé en ce que** selon les formules suivantes l'arrondi (R₁, R'₁) du côté du pied du taraudage (25) et du filetage (35) est donné par R₁,

$$R'_1 = \frac{1}{6} \mathsf{H}$$ et l'arrondi (R₂, R'₂ du côté de la tête du taraudage (25) et du filetage (35) est donné par R₂,

$$R'_2 = \frac{1}{5} \mathsf{P}$$ avec $$\mathsf{H} = \sqrt{\frac{3}{2}P}$$ et avec P comme pas du filet (26, 36) rond.

4. Accumulateur hydraulique suivant la revendication 3, **caractérisé en ce que** les prolongements fictifs de deux flancs (28) de filets voisins du taraudage (25) de l'enveloppe (10) de l'accumulateur se rencontrent en un angle aigu, dont le sommet (46) de l'angle a, par rapport à l'arrondi (32) du côté du pied, au point le plus profond, une distance $$A_F = \frac{1}{6} H$$.

5. Accumulateur hydraulique suivant l'une des revendications 3 ou 4 précédentes, **caractérisé en ce que** les prolongements fictifs de deux flancs (28) de filet voisins se rencontrent en un autre angle aigu, dont le sommet (48) de l'angle a, par rapport à une sécante (50), qui s'étend le long du côté libre de tête d'un filet au norme de même pas que le pas déterminé pour le filet (26) rond du tauradage (25) et par l'arrondi (30) du côté de la tête du taraudage (25), une distance $$A_K = \frac{1}{4} H$$.

6. Accumulateur hydraulique suivant l'une des revendications précédentes, lorsqu'elle dépend de la revendication 2, **caractérisé en ce que** le taraudage et le filetage sont conçus, de manière à ce que le diamètre nominal du segment (20) fileté corresponde à peu près à cent fois le pas P du filet (26, 36) rond respectif.

7. Accumulateur hydraulique suivant l'une des revendications précédentes, lorsqu'elle dépend de la revendication 2, **caractérisé en ce que** le contour fictif d'un filet aux normes ISO métrique correspondant au filet (36) rond de la partie (14) formant couvercle enveloppe le filet (36) rond du filetage (35).

8. Accumulateur hydraulique suivant l'une des revendications précédentes, lorsqu'elle dépend de la revendication 2, **caractérisé en ce que** dans le segment (20) fileté, les flancs (28, 38) du taraudage (25) et du filetage (35) sont en contact entre eux et les arrondis R₂, R'₁ ; R₁, R'₂ de filets voisins les uns des autres prennent une distance entre eux.

9. Accumulateur hydraulique suivant l'une des revendications précédentes, **caractérisé en ce que** le segment (20) fileté s'étend le long d'une partie d'extrémité libre de l'enveloppe (10) de l'accumulateur, dans laquelle l'épaisseur de paroi de l'enveloppe (10) de l'accumulateur est réduite, de manière à ce que le segment (20) fileté vienne à l'intérieur d'un prolongement fictif de la partie (52) de paroi intérieure sinon cylindrique de l'enveloppe (10) de l'accumulateur.

10. Accumulateur hydraulique suivant l'une des revendications précédentes, lorsqu'elle dépend de la revendication 2, **caractérisé en ce que** le segment (20) fileté, constitué d'un taraudage (25) et d'un filetage (35), débouche à ses extrémités opposées l'une à l'autre respectivement dans un évidement (54, 56) annulaire, qui est formé par des parties de paroi de l'enveloppe (10) de l'accumulateur et de la partie (14) formant couvercle.

Fig.1

8

Fig.2

EP 4 274 966 B1

Fig.3

EP 4 274 966 B1

Fig.4

EP 4 274 966 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018005204 A1
- DE 102014010006 A1
- JP H01224509 A
- EP 1564413 A1
- DE 3712671 A1
- DE 3840731 C2
- US 3433117 A